Europäisches Patentamt

European Patent Office

Office européen des brevets

(11) Veröffentlichungsnummer: **0 403 653**
**A1**

(12) **EUROPÄISCHE PATENTANMELDUNG**
veröffentlicht nach Art. 158 Abs. 3
EPÜ

(21) Anmeldenummer: **89904875.5**

(51) Int. Cl.5: **B60B 21/02**

(22) Anmeldetag: **12.01.89**

(86) Internationale Anmeldenummer:
**PCT/SU89/00003**

(87) Internationale Veröffentlichungsnummer:
**WO 90/08047 (26.07.90 90/17)**

(43) Veröffentlichungstag der Anmeldung:
**27.12.90 Patentblatt 90/52**

(84) Benannte Vertragsstaaten:
**AT DE FR GB IT SE**

(71) Anmelder: **DNEPROPETROVSKY METALLURGICHESKY INSTITUT IMENI L.I. BREZHNEVA**
**pr. Gagarina, 4**
**Dnepropetrovsk. 320635(SU)**

Anmelder: **NIZHNEDNEPROVSKY TRUBOPROKATNY ZAVOD IMENI K.LIBKNEKHTA**
**ul. Stoletova, 21**
**Dnepropetrovsk, 320060(SU)**

(72) Erfinder: **ESAULOV, Vasily Petrovich**
**ul. Chernyshevskogo, 15-18**
**Dnepropetrovsk, 320005(SU)**
Erfinder: **ALIMOV, Anatoly Andreevich**
**ul. Kuibysheva, 8a-5**
**Dnepropetrovsk, 320021(SU)**
Erfinder: **ESAULOV, Alexandr Trofimovich**
**pr. K.Marxa, 55-37**
**Dnepropetrovsk, 320030(SU)**

Erfinder: **KLIMENKO, Felix Konstantinovich**
**nab. Pobedy, 48-81**
**Dnepropetrovsk, 320094(SU)**
Erfinder: **SHEVCHENKO, Evgeny Ivanovich**
**pr. K.Marxa, 70-12**
**Dnepropetrovsk, 320070(SU)**
Erfinder: **KOZLOVSKY, Alfred Ivanovich**
**ul. Reshetilovskaya, 22-7**
**Dnepropetrovsk, 320026(SU)**
Erfinder: **STAROSELETSKY, Mikhail Iliich**
**pr. Vorontsova, 77-232**
**Dnepropetrovsk, 320081(SU)**
Erfinder: **MAHRHOLZ, Gerhard**
**Wisenstrasse 16**
**DDR-3705 Ilsenburg(DD)**
Erfinder: **WERNECKE, Hermann**
**Marchlewskistrasse 58**
**DDR-1034 Berlin(DD)**
Erfinder: **JENDRICKE, Klaus**
**Friedrichstrasse 12**
**DDR-3705 Ilsenburg(DD)**

(74) Vertreter: **Füchsle, Klaus, Dipl.-Ing. et al**
**Hoffmann . Eitle & Partner Patentanwälte**
**Arabellastrasse 4**
**D-8000 München 81(DE)**

(54) **EISENBAHNRADFELGE.**

(57) Bei einer Eisenbahnradfelge, enthaltend einen Spurkranz (2) und eine Lauffläche veränderlichen Profils mit einem Konkaven Flächenabschnitt, der durch ein Rotationsparaboloid mit einer Erzeugenden gebildet ist, welche mit dem Ausdruck $y = ax^b$ /1/ beschrieben ist, wobei a = 4,8 bis 5,4 und b = 0,23 bis 0,25 beträgt ist der konkave Flächenabschnitt mit einem konvexen Flächenabschnitt verbunden, der durch eine glatte Kurve gebildet ist, welche ihrerseits mit einem kegeligen Flächenabschnitt verbunden ist, dessen Erzeugende eine Neigung von 1:5 bis 1:20 aufweist, wobei die Verbin-

dungslinie zwischen dem konkaven und dem konvexen Flächenabschnitt im Laufkreis liegt.

EP 0 403 653 A1

EISENBAHNRADFELGE

Technisches Gebiet

Die Erfindung bezieht sich auf das Gebiet des Transportmaschinenbaus und betrifft insbesondere Ausführungen von Rädern für den Eisenbahntransport.

Die vorliegende Erfindung kann am zweckmässigsten in Voll- und Reifenrädern des rollenden Materials der Eisenbahnen (Hauptstrecken- und Industrieverkehr) verwendet werden.

Diese Erfindung ist für Schienenfahrzeuge beliebiger Art anwendbar, die auf symmetrischen gewölbten Schienen laufen.

Zugrundeliegender Stand der Technik

Weit bekannt sind Eisenbahnräder, bei denen die Lauffläche aus zwei verbundenen Kegelflächen besteht, wobei die innere Erzeugende der Kegelfläche eine Neigung von I : 20 und die damit verbundene äussere eine Neigung von I : 7 aufweist. Eine solche Form der Lauffläche setzt eine Einpunktberührung in der Ebene des Laufkreises und der Symmetrieachse des Schienenkopfes voraus.

Theoretisch müssten in diesem Falle hinreichend grosse Kontaktspannungen im Rad-Schiene-Paar (in der Grössenordnung von 1300 MPa) nicht zu einem intensiven Verschleiss der Lauffläche des Rades und dessen Spurkranzes sowie zum Auftreten gefährlicher Spannungen im Schienenkopf führen. In Wirklichkeit ist es jedoch bei weitem nicht so. Wegen kinematischer Schwingungen und Gieren des Radsatzes auf der Schiene, welche durch die Einpunktberührung zwischen der Lauffläche des Rades und dem Schienenkopf sowie durch die Toleranzen für die Schienenverlegung auftreten, wird im Betrieb die meiste Zeit eine Zweipunktberührung zwischen der Lauffläche eines Normalrades und dem Schienenkopf beobachtet, und zwar im Berührungspunkt zwischen der geradlinigen Erzeugenden des Spurkranzes und der Seitenfläche des Schienenkopfes sowie auf dem Laufkreis, der in der Regel gegenüber der Symmetrieachse des Schienenkopfes versetzt ist. Die Kontaktspannungswerte in diesen Punkten liegen bei 1450 MPa bzw. 1350 MPa. Dies führt dazu, dass der Spurkranz verstärkt unterschnitten und sehr schnell dünner wird als es zulässig ist, während sich auf der Lauffläche eine sattelförmige Verschleisszone bildet und das Metall nach aussen hin versetzt wird. Dies beschleunigt einerseits den Verschleiss der Laufflächen des Rades und der Schiene und ruft andererseits gefährliche Spannungen im Schienenkopf auf dessen Seitenflächen hervor. Gegenwärtig gibt es keine annehmbaren technischen Lösungen zum Beseitigen dieser Mängel der Kegelfläche, denn es ist unmöglich, die ursprüngliche Form der Rad- und Schienenlaufflächen kontinuierlich aufrechtzuerhalten sowie die kinematischen Schwingungen und das Gieren des Rades auf der Schiene auszuschliessen. Kraft des Gesagten ermöglicht es die Kegelfläche nicht, die Achsbelastungen und die Fahrtgeschwindigkeit der Schienenfahrzeuge zu erhöhen.

Es ist auch ein Eisenbahnrad (SU,A,619366) bekannt, dessen Lauffläche ein Rotationsparaboloid mit einer Erzeugenden darstellt, die sich aus der Bedingung der kleinsten Verschleissintensität unter realen Betriebsverhältnissen ergibt. In diesem Fall liegt in dem Rad-Schiene-Paar die lineare Berührung einer hinreichenden Länge vor, wodurch die Kontaktspannungen abgebaut werden. Doch auch hier gelingt es aufgrund einer nicht vorherzusagenden Umverteilung von Metall auf dem äusseren Teil der Lauffläche nicht, das Auftreten einer sattelförmigen Verschleisszone und somit das Auftreten gefährlicher Spannungen im Schienenkopf für die längstmögliche Zeit zu vermeiden.

Offenbarung der Erfindung

Der Erfindung liegt die Aufgabe zugrunde, die Ausführung eines Rades vorzuschlagen, bei dem die Form der Lauffläche es gewährleisten sollte, die Laufbeständigkeit durch Vermindern der kinematischen Schwingungen und der Gierintensität zu erhöhen sowie den Verschleiss der Lauffläche durch Abbau der Kontaktspannungen im Rad-Schiene-Paar bei absoluter Verkehrssicherheit und Ausschluss des negativen Einflusses auf den Oberbau zu vermindern.

Die der Erfindung zugrunde liegende Aufgabe wird dadurch gelöst, dass bei einer Eisenbahnradfelge, enthaltend einen Spurkranz und eine Lauffläche veränderlichen Profils

- 3 -

mit einem konkaven Flächenabschnitt, der durch ein Rotationsparaboloid mit einer Erzeugenden gebildet ist, welche mit dem Ausdruck $y = a.x^b$ /1/ beschrieben ist, wo $a = 4,8$ bis 5,4 und $b = 0,23$ bis 0,25 erfindungsgemäss der konkave Flächenabschnitt mit einem konvexen Flächenabschnitt verbunden ist, der durch eine glatte Kurve gebildet ist, welche ihrerseits mit einem kegeligen Flächenabschnitt verbunden ist, dessen Erzeugende eine Neigung von 1 : 5 bis 1 : 20 aufweisen kann, wobei die Verbindungslinie zwischen dem konkaven und dem konvexen Flächenabschnitts im Laufkreis liegt.

Der in bezug auf den Spurkranz äussere Teil der Lauffläche kann vorteilhafterweise von einer glatten Kurve gemäss der Gleichung $y = 12,06 - 5,4 (33 - x)^{0,23}$ /2/ gebildet werden, wobei die Erzeugende der Kegelfläche mit dem Ausdruck $y = 1,9 + 0,067 x$ /3/ beschrieben wird.

Eine solche Form der Lauffläche kann für Schienen, die einen grösseren Neigungswinkel zur Senkrechten aufweisen, und für Bahnstrecken, die viel Krümmungen kleinen Radius enthalten, empfohlen werden. In diesem Fall wird unter Beibehaltung einer gleichmässigen Umverteilung von Metall über die Lauffläche eine gute Laufbeständigkeit gewährleistet.

Die in bezug auf den Spurkranz äussere Lauffläche kann auch von einer glatten Kurve gemäss der Gleichung $y = 2,95 - \sqrt{8,65 - 0,14x}$ /4/ und von einer mit dieser verbundenen Kegelfläche, deren Erzeugende mit dem Ausdruck $y = - 0,635 + 0,05 x$ /5/ beschrieben ist, gebildet werden.

Eine solche Form der Lauffläche empfiehlt sich für Schienen mit einem kleineren Neigungswinkel zur Senkrechten und für Bahnstrecken, die weniger Krümmungen kleinen Radius enthalten. Dabei wird eine günstige Umverteilung von Metall über die Lauffläche unter Beibehaltung der Laufbeständigkeit gewährleistet.

Kurze Beschreibung der Zeichnungen

Nachstehend wird die erfindungsgemäße Ausführung der Eisenbahnradfelge unter Bezugnahme auf Begleitzeichnungen beschrieben, in denen es zeigt:

Fig.1 das Anordnungsschema der erfindungsgemäßen Eisenbahnradfelge, im Querschnitt;

Fig. 2 das Wiederherstellungsschema des bekannten Profils;

Fig. 3 das Wiederherstellungsschema des bekannten Profils;

Fig. 3 das Wiederherstellungsschema des Profils der gekrümmten Lauffläche, gemäss der Erfindung.

Beste Ausführungsform der Erfindung

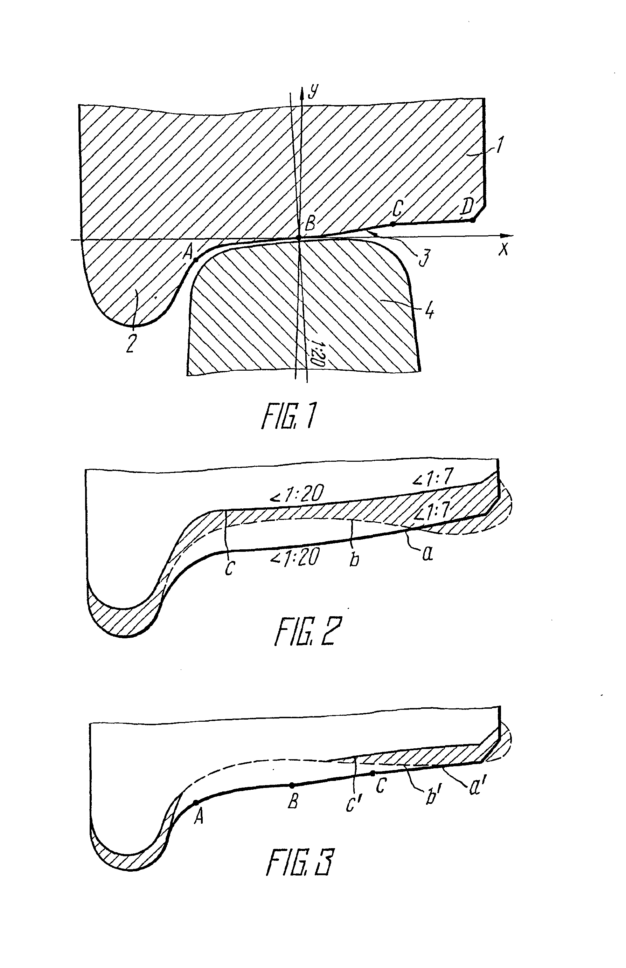

Gemäss der Erfindung schliesst das Profil der Eisenbahnradfelge 1 (Fig. 1) einen Spurkranz 2 und eine Lauffläche 3 ein, wobei diese letztere aus zwei krummlinigen Abschnitten AB und BC und einer geradlinigen Erzeugenden CD besteht. Der Abschnitt AB wird dabei mit der Erzeugenden eines Rotationsparaboloids gemäss der Gleichung $y = a \cdot x^b$ /1/, wo a = 4,8 bis 5,4 und b = 0,23 bis 0,25, beschrieben, während der Abschnitt BC mit einer glatten konkaven Kurve beschrieben wird, welche ihrerseits mit der Erzeugenden einer Kegelfläche mit einer Neigung von 1 : 5 bis 1 : 20 auf dem Abschnitt CD verbunden ist. Gemäss der ersten Ausführungsform der Erfindung wird der konkave Abschnitt AB im gewählten Koordinatensystem mit der Gleichung $y = 5,4 (33 + x)^{0,23} - 12,06$ /6/ beschrieben. Der konvexe Abschnitt BC wird mit dem Ausdruck $y = 12,06 - 5,4 (33 - x)^{0,23}$ /2/ beschrieben und mit dem geradlinigen Abschnitt CD verbunden, der sich mit dem Ausdruck $y = 1,9 + 0,067 x$ /3/ beschreiben lässt. Auf der in bezug auf den Spurkranz 2 äusseren Seite endet die Lauffläche 3 in der Regel mit einer 5 mm breiten Fase.

Die Koordinatenwerte (x, y) der Punkte der krummlinigen Erzeugenden nach dieser Ausführungsform der Erfindung sind in Tabelle 1 aufgeführt.

Tabelle 1

| | A | Abschnitt AB | | | | | | | |
|---|---|---|---|---|---|---|---|---|---|
| X | -32 | -30 | - 28 | - 26 | -24 | -20 | - 17 | -11 | - 5 |
| Y | -7,2 | -5,1 | -4,2 | -3,6 | -3,1 | -2,3 | - 1,8 | -2,1 | -0,4 |

| | B | Abschnitt | | B | C | | C | D |
|---|---|---|---|---|---|---|---|---|
| | 0 | 5 | 10 | 20 | 25 | 26 | 26,5 | 55 |
| | 0 | 0,4 | 1,0 | 2,3 | 3,3 | 3,6 | 3,7 | 5,6 |

In einer anderen Ausführungsform der Erfindung wird der konkave Abschnitt AB im gewählten Koordinatensystem mit der Gleichung $y = 5,4 (33 + x)^{0,23} - 12,06$ /6/ beschrieben. Der konvexe Abschnitt BC wird mit dem Ausdruck $y = 2,95 - 8,65 - 0,14x$ /4/ beschrieben und mit dem geradlinigen Abschnitt CD verbunden, der mit dem Ausdruck $y = -0,635 + 0,05 x$ /5/ beschrieben ist. Auf der in bezug auf den Spurkranz 2 äusseren Seite endet die Lauffläche 3 in der Regel mit einer 5 mm breiten Fase.

Die Koordinatenwerte (x,y) der Punkte der krummlinigen Erzeugenden nach dieser Ausführungsform der Erfindung sind in Tabelle 2 aufgeführt.

Tabelle 2

| | A | Abschnitt AB | | | | | | | |
|---|---|---|---|---|---|---|---|---|---|
| X | - 32 | -31 | - 29 | -27 | -23 | -17 | -14 | -8 | -2 |
| Y | -7,2 | -5,7 | -4,6 | -3,9 | -2,9 | -1,8 | -1,4 | -0,7 | -0,2 |

| | B | Abschnitt BC | | | | | C | D |
|---|---|---|---|---|---|---|---|---|
| | 0 | 3 | 10 | 15 | 20 | 25 | 28,5 | 56 |
| | 0 | 0,1 | 0,3 | 0,4 | 0,5 | 0,7 | 0,8 | 2,1 |

Das Eisenbahnrad mit Felge gemäss der Erfindung funktioniert folgendermaßen. Beim Rollen des Rades auf der Schiene während der anfänglichen Betriebsperiode berührt der in bezug auf den Spurkranz 2 innere Teil der Lauffläche 3 (Abschnitt AB) gemäss der Erfindung den Schienenkopf 4 in einer Linie mit Kontaktspannungen von 900 MPa. Und ihr äusserer Teil hat auf dem Abschnitt BC gemäss der ersten Ausführungsform der Erfindung eine Punktberührung mit dem Schienenkopf mit einer Spannung von ca. 1400 MPa, wobei sich der Berührungspunkt hinsichtlich des Laufkreises auf der dem Spurkranz gegenüberliegenden Seite befindet. Es entsteht also im Rad-Schiene-Berührungsbereich ein "Muldeneffekt", wodurch sich die Laufbeständigkeit wesentlich erhöht. Da es nicht gelingt, das Gieren des Radsatzes und die kinematischen Schwingungen vollständig zu beseitigen, wird das Metall dennoch auf dem Abschnitt BC ausgerollt kaltverfestigt. Gemäss der zweiten Ausführungsform der Erfindung hat der in bezug auf den Spurkranz äussere Teil BC der Lauffläche ebenso eine Einpunktberührung mit dem Schienenkopf, allerdings bei einer Spannung von ca. 1250 MPa. Der "Muldeneffekt" im Rad-Schienen-Berührungsbereich lässt dabei etwas nach, dafür aber tritt die Möglichkeit auf, diesen Abschnitt aufgrund des stetigen Charakters der Kurven des Gierens und der kinematischen Schwingungen gleichmässig und hinreichend intensiv nach der Aussenseite hin auszurollen. Die dabei vor sich gehende Kaltverfestigung ermöglicht es, auf dem Abschnitt BC eine Härte von Ca. 500 HB schnell zu erhalten.

Da in den beiden Ausführungsformen der Erfindung der innere Teil AB abnutzungsmässig optimal ausgebildet ist und während des Ausrollens und der Kaltverfestigung des Abschnitts BC dieser praktisch abriebfrei verfestigt wird, so wird die gesamte Lauffläche gemäss der Erfindung eine Form annehmen, bei der sie die minimale Verschleissintensität aufweist, d.h. die Form bleibt bei dem Betrieb für die längstmögliche Zeit unverändert. Die quantitativen Werte der Verschleissintensität einer solchen Form sind zwei- bis dreimal so niedrig wie bei anderen Laufflächenformen.

Die Technologie des Nachdrehens des Eisenbahnradfelgenprofils schliesst die mechanische Beseitigung des während des Betriebes gebildeten sattelförmigen Verschleisses (Abriebes) mittels Radsatzdrehmaschinen und die Wiederherstellung des Spurkranzes sowohl in Form, als auch in Hauptparametern ein. Die Dicke des von der Lauffläche abzutragenden Metalls richtet sich dabei nach dem Wiederherstellungsschema des Spurkranzes.

Bei dem bekannten Profil muss man die Lauffläche wegen der starken Abnutzung des Spurkranzes während der Bildung einer zulässigen Auswalzstelle auf die Tiefe abdrehen, die bis 80 % der Abriebtiefe auf dem Laufkreis ausmacht.

Bei dem erfindungsgemäss vorgeschlagenen Profil läuft das Nachdrehen kraft der Erhaltung sowohl der Form, als auch der geometrischen Parameter des Spurkranzes und Erhaltung und Verfestigung der Ausgangsform in einem Drittel der Länge der Lauffläche im wesentlichen auf das Nivellieren des Spur-

EP 0 403 653 A1

- 7 -

kranzes und der kegeligen Lauffläche hinaus. Dabei wird die Masse des während des Nachdrehens abzutragenden Metalls um das 3 bis 4fache reduziert, wodurch die Betriebsdauer der Räder zwischen den Nachdrehbearbeitungen wesentlich zunimmt und sich dabei die gesamte Lebensdauer der Räder nahezu auf das zweifache erhöht.

In Fig. 2 und 3 werden die Vorteile des erfindungsgemäss vorgeschlagenen Profils gegenüber dem bekannten beim Reparaturnachdrehen veranschaulicht. Die Kurve a (a') entspricht den neuen Profilen, die Kurve b (b') den abgenutzten, und die Kurve c (c') ist die Erzeugende der wiederhergestellten Lauffläche, wobei mit der Schraffur die beim Nachdrehen abzutragende Metallmenge angedeutet ist.

Somit bleibt die erfindungsgemässe Form der Lauffläche der Eisenbahnradfelge praktisch während der ganzen Betriebszeit zwischen den Nachdrehbearbeitungen abnutzungsmässig optimal und gewährleistet gegenüber allen bekannten Formen eine bessere Laufbeständigkeit von Schienenfahrzeugen.

Gewerbliche Verwertbarkeit

Die zu patentierende Erfindung ist zweckmäßigerweise bei Voll- und Reifenrädern des rollenden Materials der Eisenbahnen (Hauptstrecken- und Industrieverkehr) anzuwenden.

Möglich ist die Verwendung der zu patentierenden Erfindung für Schienenfahrzeuge eines beliebigen Typs, die auf symmetrischen gewölbten Schienen laufen.

EP 0 403 653 A1

- 8 -

PATENTANSPRÜCHE

1. Eisenbahnradfelge (1), enthaltend einen Spurkranz (2) und eine Lauffläche veränderlichen Profils mit einem konkaven Flächenabschnitt, der durch ein Rotationsparaboloid mit einer Erzeugenden gebildet ist, welche mit dem Ausdruck $y = ax^b$ /1/ beschrieben ist, wobei a = 4,8 bis 5,4 und b=0,23 bis 0,25 ist, dadurch g e k e n n z e i c h n e t, dass der konkave Flächenabschnitt mit einem konvexen Flächenabschnitt verbunden ist, der durch eine glatte Kurve gebildet ist, welche ihrerseits mit einem kegeligen Flächenabschnitt verbunden ist, dessen Erzeugende eine Neigung von 1:5 bis 1:20 aufweist, wobei die Verbindungslinie zwischen dem konkaven Flächenabschnitt im Laufkreis liegt.

2. Eisenbahnradfelge nach Anspruch 1, dadurch g e k e n n z e i c h n e t, dass die Erzeugende des konvexen Flächenabschnitts mit einer glatten Kurve gemäss der Gleichung $y = 12,06 - 5,4 (33 - x)^{0,23}$ /2/ und die Erzeugende des kegeligen Flächenabschnitts mit dem Ausdruck $y = 1,9 + 0,067x$ /3/ beschrieben sind, wo x und y laufende Koordinaten sind, wobei der Koordinatenursprung an der Laufkreislinie liegt.

3. Eisenbahnradfelge nach Anspruch 1, dadurch g e k e n n z e i c h n e t, dass die Erzeugende des konvexen Flächenabschnitts mit einer glatten Kurve gemäss der Gleichung $y = 2,95 - \sqrt{8,65 - 0,14x}$ /4/ und die Erzeugende des kegeligen Flächenabschnitts mit dem Ausdruck $y = - 0,635 + 0,05x$ /5/ beschrieben sind, wo x und y laufende Koordinaten sind, wobei der Koordinatenursprung an der Laufkreislinie liegt.

EP 0 403 653 A1

FIG. 1

FIG. 2

FIG. 3

# INTERNATIONAL SEARCH REPORT

International Application No PCT/SU 89/00003

## I. CLASSIFICATION OF SUBJECT MATTER (If several classification symbols apply, indicate all) *

According to International Patent Classification (IPC) or to both National Classification and IPC

Int.Cl. $^5$    B 60 B 21/02

## II. FIELDS SEARCHED

### Minimum Documentation Searched 7

| Classification System | Classification Symbols |
|---|---|
| Int.Cl.$^5$ | B 60 B 21/00, 21/02 |

Documentation Searched other than Minimum Documentation
to the Extent that such Documents are Included in the Fields Searched *

## III. DOCUMENTS CONSIDERED TO BE RELEVANT 9

| Category * | Citation of Document, 11 with indication, where appropriate, of the relevant passages 12 | Relevant to Claim No. 13 |
|---|---|---|
| A | SU,A1,619366, (DNEPROPETROVSKY METALLURGICHESKY INSTITUT ),28 June 1980 (28.06.80), (cited in the description) | I |
| A | SU,A1,1041318,(LENINGRADSKY INZHENERNO-STROITELNY INSTITUT),15 September 1983 (15.09.83) | I-3 |
| A | SU,A1,1240637, (DNEPROPETROVSKY INSTITUT INZHENEROV ZHELEZNODOROZHNOGO TRANSPORTA IM. M.I. KALININA),30 June 1986 (30.06.86) | I |
| A | SU,A1,1440754, (DNEPROPETROVSKY INSTITUT INZHENEROV ZHELEZNODOROZHNOGO TRANSPORTA IM. M.I.KALININA),30 November 1988 (30.11.88) | I-3 |

* Special categories of cited documents: 10

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art.

"&" document member of the same patent family

## IV. CERTIFICATION

| Date of the Actual Completion of the International Search | Date of Mailing of this International Search Report |
|---|---|
| 26 September 1989 (26.09.89) | 02 October 1989 (02.10.89) |
| International Searching Authority | Signature of Authorized Officer |
| ISA/SU | |

Form PCT/ISA/210 (second sheet) (January 1985)